# EUROPEAN PATENT APPLICATION

(11) **EP 4 275 797 A1**
(43) Date of publication of application: **15.11.2023**
(21) Application number: 22172339.8
(22) Date of filing: 09.05.2022
(51) Int. Cl.: B04B 5/12

(54) **A CENTRIFUGAL SEPARATOR**

(71) Applicant: Alfa Laval Corporate AB, 221 00 Lund (SE)
(72) Inventor: ELIASSON, Thomas, 125 40 Älvsjö (SE)
(74) Representative: Alfa Laval Attorneys

(57) **Abstract**

The disclosure concerns a centrifugal separator (2) for separating a gas liquid mixture into a gaseous and a liquid phase. The centrifugal separator comprises: a first separation space (6), a first separation aid (10) arranged inside the first separation space (6), a drive arrangement (7) configured for rotating the first separation aid (10), an inlet (16), a gas outlet (18), and a liquid outlet (20). The centrifugal separator further comprises a second separation space (22), a second separation aid (24) arranged inside the second separation space (22). The drive arrangement (7) is configured for rotating the second separation aid (24). A first passage (26) connects the inlet (16) with the first separation space (6) and a second passage (28) connects the inlet (16) with the second separation space (22).

## Description

### TECHNICAL FIELD

The invention relates to a centrifugal separator for separating a gas liquid mixture into a gaseous phase and a liquid phase.

### BACKGROUND

Centrifugal separators may be devised for separating a gas liquid mixture into a gaseous phase and a liquid phase. The liquid phase may include solid particles. One example of such gas liquid separation is the removal of oil and other particles from crankcase gas.

Crankcase gas is ventilated from a crankcase of an internal combustion engine, ICE. Crankcase gas may be disposed of in an environmentally friendly manner instead of being ventilated in untreated form to the atmosphere. For certain types of combustion engines, legislation even requires crankcase gas to be disposed of in an environmentally friendly manner.

Crankcase gas may comprise inter alia blow-by gases, oil, other liquid hydrocarbons, soot, and other solid combustion residues. In order to dispose of crankcase gases suitably, the gas is separated from oil, soot, and other residues. The separated gas may be led to an air intake of the combustion engine or vented to the atmosphere. The oil may be led back to an oil sump of the combustion engine optionally, via an oil filter for removing soot and other solid residues from the oil.

A centrifugal separator may be used for disposing of crankcase gas. The crankcase gas is led into a rotor of the centrifugal separator and heavy constituents of the crankcase gas, such as oil and soot, are separated as a liquid phase from a cleaned gaseous phase. The liquid phase is led out of the centrifugal separator via a liquid outlet. The gaseous phase is lead out of the centrifugal separator via a gas outlet and may be directed to an air intake of the ICE.

One constructional feature that is common among centrifugal separators configured for gas-liquid separation is that a rotor comprising separation aids e.g., in the form of separation discs, is arranged in a stationary housing. That is, the rotor rotates in a separation space that is stationary within the housing. The separation of gas and liquid may be in the form of concurrent separation i.e., the gas and the liquid are both moving in the same direction through the rotor while being separated. Alternatively, the separation of gas and liquid may be in the form of counter-current separation i.e., the gas and the liquid move in opposite directions through the rotor while being separated.

The construction of a liquid-liquid separator or liquid-solid separator is different from the above discussed feature of providing a stationary separation space. Namely, in a liquid-liquid separator or liquid-solid separator, the rotor as such delimits the separation space. That is, the separation space rotates together with the separation aid. Liquid-liquid separation and liquid-solid separation can only be efficiently performed in counter-current separation.

WO 2019/175079 discloses a centrifugal separator for the separation of oil droplets from crankcase ventilation gas. A rotor comprises a shaft with discs which are arranged above one another in a disc stack. Adjacent discs delimit a flow gap therebetween. The rotor is arranged in a housing with a raw gas inlet, a pure gas outlet and an oil outlet. The disc stack is divided along its axial direction into a first and a second disc stack portion. The gas flows in series through the two disc stack portions. The raw gas inlet opens into a radially inner region of the first disc stack portion such that during operation it is flowed through by the gas in a direction radially outwardly. The second disc stack portion is flowed through by the gas in a direction radially inwardly. That is in the first disc stack portion concurrent separation is performed and in the second disc stack portion counter-current separation is performed. This arrangement of the two disc stack portions is provided in order to improve the separation of the oil from the gas.

In many countries, legislation related to emission of crankcase gas from land-based vehicles is very strict. Gas liquid centrifugal separators are therefore a standard component of many kinds of ICE:s for land-based vehicles.

For larger ICE:s than those for land-based vehicles, larger gas liquid centrifugal separators are required to handle the correspondingly larger flow of crankcase gas.

On a more general note, the larger a flow of a gas liquid mixture to be separated, the larger a separation capacity is required by the separation equipment for separating the gas liquid mixture.

### SUMMARY

A gas liquid centrifugal separator comprising a rotor with a separation aid, such as a stack of separation discs, is designed for a particular flow rate of a gas liquid mixture. Commonly the gas liquid mixture is introduced at a centre of the rotor and separated as it flows radially outwardly, passing the separation aid. The rotor is arranged in a housing delimiting a separation space.

The scaling up of a centrifugal separator for separating a gas liquid mixture poses its particular problems.

A centrifugal separator for separating a gas liquid mixture may also act as a pump for drawing the gas liquid mixture through the conduits conducting the gas liquid mixture to the centrifugal separator.

If for instance, the gas liquid mixture is crankcase gas from an ICE, the crankcase ventilation of the ICE should not be restricted by a high counter pressure from the crankcase gas cleaning arrangement. Long conduits entail high pressure drop. Thus, the centrifugal separator acting as a pump will compensate for the pressure drop in the conduit leading up to the centrifugal separator.

A gas flow rate higher than the design flow rate of a centrifugal separator will cause an undesired high pressure drop in the gas liquid separator primarily due to the dimensions of the central gas passage within the rotor and the dimensions of the space between the rotor and the housing.

In order to maintain an appropriate pump capacity of a centrifugal separator devised for higher flow rates, this pressure drop should be reduced or eliminated. A redesigning of the dimensions of the gas liquid centrifugal separator is required to reduce or eliminate the pressure drop. Such redesign requires an increased inner diameter of the rotor for the gas liquid mixture. This reduces separation capacity if the outer diameter of the rotor is not increased. Thus, a larger diameter rotor and/or a longer rotor would be required. Moreover, such a redesign requires a larger diameter of the housing to increase the distance between the rotor and the housing for reducing or eliminating the pressure drop. Such an increased distance between the rotor and the housing augments the risk of remixing of separated liquid phase with the cleaned gaseous phase before the separated liquid phase is deposited on the inner surface of the housing. Thus, redesigning for an increased flow rate with low pressure drop will at least lead to a larger diameter housing of the centrifugal separator.

It would be advantageous to achieve a centrifugal separator generally formed to handle large gas liquid flow rates. In particular, it would be desirable to enable a gas liquid centrifugal separator being designed to handle large gas liquid flow rates within compact dimensions, at least in a radial direction of an axis of the centrifugal separator. To better address one or more of these concerns, a centrifugal separator having the features defined in the independent claim is provided.

According to an aspect of the invention, there is provided a centrifugal separator for separating a gas liquid mixture into a gaseous phase and a liquid phase. The centrifugal separator comprises: a housing, a first separation space delimited at least in part by the housing, a first separation aid for separating the liquid phase from the gaseous phase arranged inside the first separation space, a drive arrangement configured for rotating the first separation aid, an inlet for the gas liquid mixture, a gas outlet for the separated gaseous phase, a liquid outlet for the separated liquid phase, a second separation space delimited at least in part by the housing, a second separation aid for separating the liquid phase from the gaseous phase arranged inside the second separation space. The drive arrangement is configured for rotating the second separation aid. A first passage connects the inlet with the first separation space, and a second passage connects the inlet with the second separation space.

Since the housing of the centrifugal separator delimits the first and second separation spaces and comprises the first and second separation aids arranged in the first and second separation spaces, respectively, and since the first passage connects the inlet with the first separation space and the second passage connects the inlet with the second separation space, the centrifugal separator is devised for distributing the inflowing gas liquid mixture between two separate portions of the centrifugal separator. Accordingly, only partial flow rates of the total flow rate of gas liquid mixture will flow through each of the first and second separation spaces and separation aids. Thus, provisions for a comparatively low total pressure drop are provided within a centrifugal separator of compact dimensions, in particular, in the radial direction of the respective first and second separation aids.

More specifically, the inventor has realised that by dividing the flow of gas liquid mixture between two parallel flow paths through the centrifugal separator, the pressure drop affecting the gas liquid mixture and the separated gaseous phase as it passes through the separator, is reduced. More specifically, the flow rate in each flow path is reduced e.g. to half the incoming flow rate. Since according to rudimentary pipe fluid flow formulas, the pressure drop of the gas/gaseous phase is approximately related to the square of the gas speed for turbulent flows, i.e. the ratio of the flow rate to the cross section, it is seen that doubling the cross section by using two separation aids may generate a four-fold reduction of the pressure drop. Thus, the centrifugal separator can be of compact dimensions while providing for a low pressure drop at a nominal flow rate through the centrifugal separator.

The low pressure drop may be advantageous e.g., when the centrifugal separator is utilised for separating a liquid phase from a gas liquid mixture in the form of crankcase gas. The low pressure drop ensures a low counter-pressure for the crankcase ventilation of the relevant internal combustion engine, ICE.

Accordingly, the centrifugal separator may be arranged for cleaning crankcase gas from an ICE. For instance, such an ICE may be a large diesel engine. Such a large diesel engine may be configured for propelling a seaborn vessel or for driving an electric generator of an electric power plant.

The crankcase gas, also referred to as blow-by gas, may be ventilated from the crankcase of the ICE via a crankcase ventilation system. The centrifugal separator may form part of the crankcase ventilation system.

The crankcase gas is the result of the high pressure within the cylinders of the ICE forcing some of the combustion gas and liquid and solid residues past the piston rings down into the crankcase of the ICE. If not ventilated, an increased pressure within the crankcase may cause engine oil to leak out of the ICE and the liquid and solid residues may contaminate and/or dilute the engine oil.

Accordingly, the gas liquid mixture may be crankcase gas and the centrifugal separator may be configured to separate heavy constituents of the crankcase gas, such as oil, other liquid hydrocarbons, soot, and other solid combustion residues from the crankcase gas as the liquid phase.

However, the centrifugal separator may alternatively be utilised in other gas liquid separation applications, such as metal cutting cooling liquid mist separation.

In operation of the centrifugal separator, the gas liquid mixture is led into the first and second separation spaces and the first and second separation aids via the inlet and the first and second passages.

Accordingly, during use of the centrifugal separator, a flow of gas liquid mixture through the inlet is divided into two parallel flow paths within the centrifugal separator, a first flow path into the first separation aid and the first separation space and a second flow path into the second separation aid and the second separation space.

The first separation aid and the first separation space may be of substantially the same size and construction as the second separation aid and the second separation space. In this manner, the two parallel flow paths may provide substantially similar resistance and the first and second flow paths will have the same flow rate.

The gas liquid mixture may enter the respective separation aid from a central portion thereof. As the first and second separation aids rotate, the heavy constituents, such as liquid and optionally also particles, are deposited on radially inwardly facing surfaces and/or forwardly facing surfaces (in the rotational direction) of the separation aids. The heavy constituents are thus, separated and form droplets flowing along these surfaces. At an outer periphery of the respective separation aid the droplets are propelled against an inner wall surface delimiting the respective separation space. The droplets form the separated liquid phase which flows along the inner wall surface towards the liquid outlet, where it is led out of the centrifugal separator. The cleaned gas i.e., the gaseous phase, is relieved of all or substantially all the heavy constituents of the gas liquid mixture and led out of the centrifugal separator via the gas outlet.

Each of the first and second separation aids has a rotational axis, about which the respective separation aid is rotated. An axial direction extends along each rotational axis and a radial direction extends perpendicularly to each rotational axis. A central portion of a separation aid is closer to its rotational axis than a peripheral potion of the separation aid. A circumferential direction extends around the rotational axis and/or around the separation aid.

Each of the first and second separation aids forms a rotor or a main part of a rotor which is driven by the drive arrangement.

Each of the separation aids may be rotation symmetrical.

The first and second separation aids ensure a consistent separation of liquid from the gas liquid mixture. More specifically, the separation aids comprise a number of separating members, which improve the separation of the heavy constituents from the gas liquid mixture. Such separating members may take the form of e.g., axially extending vanes which are directed radially from the rotor shaft or stacked frustoconical separation discs. As the rotor rotates, the heavy constituents are forced against surfaces of the separating members whereon they form droplets while traveling along the separation members towards the outer periphery of the respective separation aid.

The housing of the centrifugal separator is stationary in relation to e.g., an ICE the crankcase gas of which is to be cleaned by the centrifugal separator.

The first and second separation aids are arranged to rotate in relation to the housing during use of the centrifugal separator. Accordingly, the housing is stationary in relation to the first and second separation aids during use of the centrifugal separator. Thus, also the first and separation spaces are stationary in relation to the housing during use of the centrifugal separator.

During use of the centrifugal separator, the rotating first and second separation aids will accelerate the gas liquid mixture in the circumferential direction. The separated liquid and gaseous phases will rotate with the separation aids. In the first and second separation spaces between the respective separation aids and the inner wall surfaces, the gaseous phase will continue to flow circumferentially at various degrees while flowing towards the gas outlet.

According to embodiments, the centrifugal separator may be configured for concurrent separation of the gas liquid mixture into the gaseous phase and the liquid phase. That is, the separated phases travel in the same direction, radially outwardly through the first and second separation aids, respectively.

More specifically, the centrifugal separator may be configured for concurrent separation of the gas liquid mixture into the gaseous phase and the liquid phase in each of the first and second separation aids.

As discussed above, the liquid phase may travel from the central portions of the respective separation aids towards their peripheries. So may the other separated phase i.e., the gaseous phase. The gaseous phase may travel from the central portion of the respective separation aids towards their peripheries while the heavy constituents are separated from the gas.

According to embodiments, the inlet may be arranged between the first and second separation spaces. In this manner, the gas liquid mixture may be introduced centrally into the centrifugal separator. Accordingly, the first and second passages leading to the first and second separation spaces may be of substantially the same length which promotes equal distribution of the gas liquid mixture between the first and second separation spaces.

According to embodiments, the first and second passages may extend in opposite directions from the inlet. In this manner, the gas liquid mixture may be directed from the inlet in opposite directions into the respective first and second separation aids and separation spaces.

According to embodiments, radially outer portions of the first and second separation spaces, may be arranged in fluid communication with the gas outlet. In this manner, the gas outlet may be provided as a common gas outlet for both the first and second separation spaces.

According to embodiments, radially outer portions of the first and second separation spaces, may be arranged in fluid communication with the liquid outlet. In this manner, the liquid outlet may be provided as a common liquid outlet for both the first and second separation spaces.

According to embodiments, the first and second separation aids, may be arranged along a common axis. In this manner, the first and second separation aids may be lined up along the common axis. Thus, the above discussed provisions for the compact dimensions in the radial direction of the centrifugal separator may be utilised for proving a comparatively small diameter centrifugal separator.

According to embodiments, in a use position of the centrifugal separator, the common axis may extend substantially horizontally. In this manner, gravity will influence the flow of the gas liquid mixture and the separated phases in an equal manner in the first and second separation spaces. Thus, flow conditions in the first and second separation spaces may be substantially similar.

According to embodiments, the drive arrangement may comprise a rotor shaft extending along the common axis through the first and second separation spaces. The first and second separation aids may be connected to the rotor shaft. In this manner, the first and second separation aids may be conveniently rotated via a common shaft and accordingly, via a common drive unit connected to the rotor shaft.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:

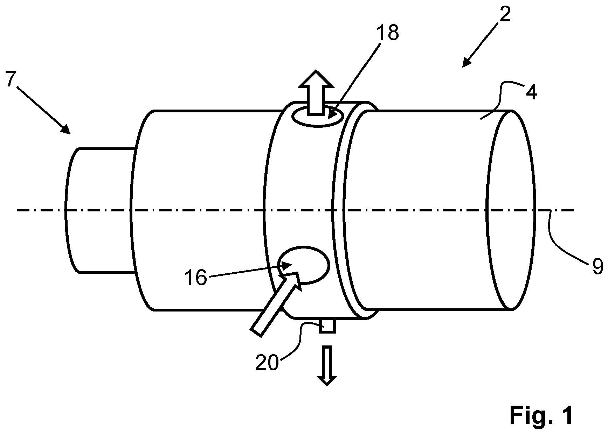

Fig. 1 illustrates a,
   Fig. 1 schematically illustrates a centrifugal separator according to embodiments, and
Figs. 2a and 2b schematically illustrate cross sections through a centrifugal separator according to embodiments.

### DETAILED DESCRIPTION

Aspects and/or embodiments of the invention will now be described more fully. Like numbers refer to like elements throughout. Well-known functions or constructions will not necessarily be described in detail for brevity and/or clarity.

**Fig. 1** schematically illustrates a centrifugal separator 2 according to embodiments.

The centrifugal separator 2 is configured for separating a gas liquid mixture into a gaseous phase and a liquid phase. The gas liquid mixture may be a crankcase gas from an internal combustion engine or a gas liquid mixture from metal cutting using cooling liquid.

The centrifugal separator 2 comprises a housing 4 which delimits therein at least in part a first separation space and second separation space. A first separation aid is arranged in the first separation space and a second separation aid is arranged in the second separation spaces. The housing 4 may be formed from one or more parts.

The centrifugal separator 2 comprises a drive arrangement 7 configured for rotating the first and second separation aids about a common axis 9.

In the illustrated embodiments, the drive arrangement 7 comprises a drive unit in the form of one electric motor configured for rotating the first and second separation aids. In alternative embodiments, the drive arrangement may comprise two separate electric motors, one electric motor for rotating each of the first and second separation aids about a common axis or separate axes.

As an alternative to one or two electric motors, the drive arrangement may comprise one or two drive units comprising a pneumatic motor, a hydraulic motor, a turbine wheel, a gear wheel, a pulley, a belt drive, etc.

The centrifugal separator 2 further comprises an inlet 16 for the gas liquid mixture, a gas outlet 18 for the separated gaseous phase, and a liquid outlet 20 for the separated liquid phase.

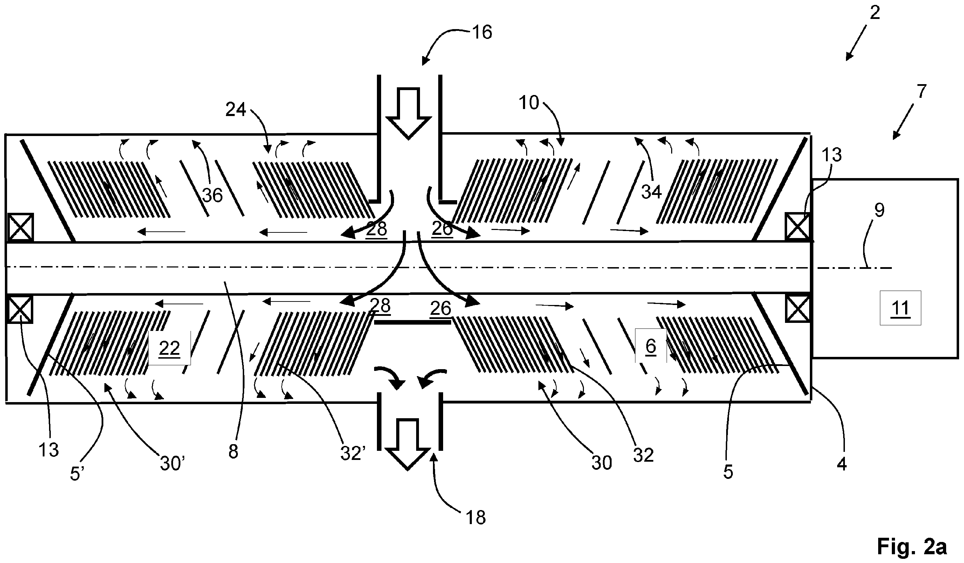

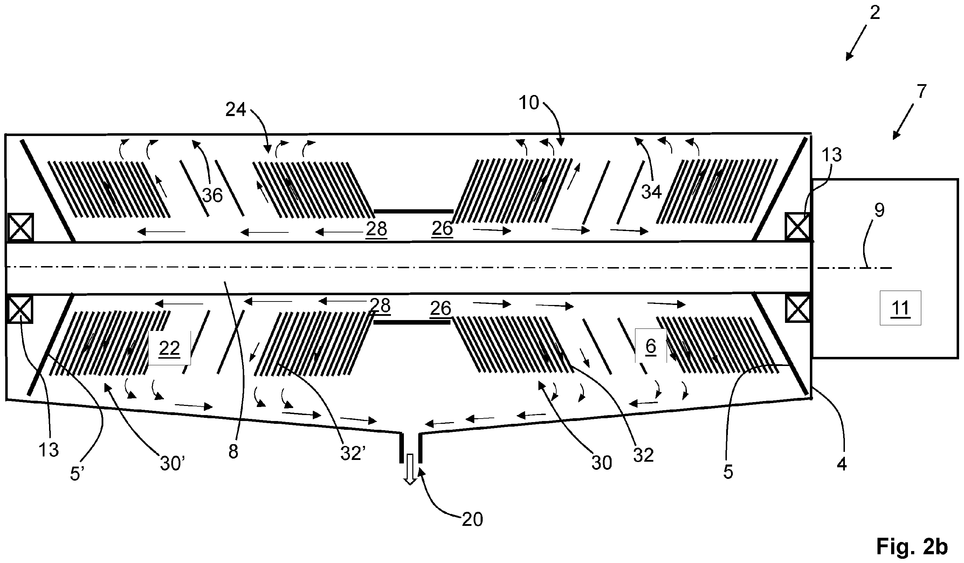

**Figs. 2a** **and** **2b** schematically illustrate cross sections through a centrifugal separator 2 according to embodiments. The cross sections extend perpendicularly to each other. In a use position of the centrifugal separator 2, the cross section of **Fig. 2a** extends in a horizontal plane and the cross section of **Fig. 2b** extends in a vertical plane.

Again, the centrifugal separator 2 is configured for separating a gas liquid mixture into a gaseous phase and a liquid phase. The centrifugal separator 2 may be similar to the centrifugal separator 2 discussed above with reference to **Fig. 1**. Again, the gas liquid mixture may be a crankcase gas from an internal combustion engine or mist from metal cutting using cooling liquid.

Again, the centrifugal separator 2 comprises a housing 4, a first separation space 6 delimited therein at least in part by the housing 4, a first separation aid 10 for separating the liquid phase from the gaseous phase arranged inside the first separation space 6, a second separation space 22 delimited at least in part by the housing 4, and a second separation aid 24 for separating the liquid phase from the gaseous phase arranged inside the second separation space 22.

The housing 4 may be formed from one or more parts. For instance, the housing 4 may comprise a first circumferentially extending inner wall surface 34 which partially delimits the first separation space 6. Similarly, the housing 4 may comprise a second circumferentially extending inner wall surface 36 which partially delimits the second separation space 22.

More specifically, the housing 4 may comprise liquid phase receiving circumferential inner wall surfaces 34, 36. The circumferential inner wall surfaces 34, 36 are circumferential in the sense that they extend circumferentially around the respective first and second separation spaces 6, 22. The inner wall surfaces 34, 36 are configured to receive thereon droplets of separated liquid phase and thus, are liquid phase receiving wall surfaces.

Put differently, circumferentially extending inner surfaces 34, 36 of the housing 4 may form receiving surfaces for the separated liquid phase in the first and second separation spaces 6, 22.

In the illustrated embodiments, in axial directions, each of the first and second separation spaces 6, 22 is further delimited by an axial end disc 5, 5' connected to a rotor shaft 8 of the centrifugal separator 2. Alternatively, or additionally, the first and second separation spaces 6, 22 may be delimit in respective axial directions by portions of the housing 4.

The centrifugal separator 2 further comprises a drive arrangement 7 configured for rotating the first separation aid 10 and the second separation aid 24.

The drive arrangement 7 may comprises at least a first drive unit 11 configure to rotate the first separation aid 10.

In the illustrated embodiments, the drive arrangement 7 is configured for rotating the first and second separation aids 10, 24 about a common axis 9. Accordingly, the first drive unit 11 may be configured to rotate the first and second separation aids 10, 24.

In the illustrated embodiments, the drive unit 11 is an electric motor configured for rotating the rotor shaft 8 but the drive unit 11 may be of any alternative kind as discussed above.

Accordingly, the first and second separation aids 10, 22 are arranged along the common axis 9. Consequently, also the first and second separation spaces 6, 22 are aligned along the common axis 9. This may provide for the dimensions of the first and second separation spaces 6, 22 to dictate the outer dimensions of the centrifugal separator 2. Thus, the centrifugal separator 2 may have compact dimensions along the common axis 9.

The drive arrangement 7 comprises the rotor shaft 8. The rotor shaft 8 extends along the common axis 9 through the first and second separation spaces 6, 22. The first and second separation aids 10, 24 are connected to the rotor shaft 8.

The rotor shaft 8 may be journaled in the housing 4 in any suitable manner. In the illustrated embodiments, a bearing 13 is arranged at each end portion of the rotor shaft 8. The bearings 13 may be one or more of e.g., a ball bearing, a roller bearing, or a plain bearing.

The centrifugal separator 2 further comprises an inlet 16 for the gas liquid mixture and a gas outlet 18 for the separated gaseous phase, see **Fig. 2a**, as well as a liquid outlet 20 for the separated liquid phase, see **Fig. 2b**.

A first passage 26 connects the inlet 16 with the first separation space 6. A second passage 28 connects the inlet 16 with the second separation space 22.

Thus, during use of the centrifugal separator 2, a flow of gas liquid mixture through the inlet 16 is divided into two parallel flow paths within the centrifugal separator, one flow path along each of the first and second passages 26, 28.

Accordingly, upstream of the first separation space 6, it is arranged in fluid communication with the inlet 16 via the first passage 26. Downstream of the first separation spaces 6, it is arranged in fluid communication with the gas outlet 18 and the liquid outlet 20. Similarly, upstream of the second separation space 22, it is arranged in fluid communication with the inlet 16 via the second passage 28. Downstream of the second separation spaces 22, it is arranged in fluid communication with the gas outlet 18 and the liquid outlet 20.

More specifically, radially outer portions of the first and second separation spaces 6, 22 are arranged in fluid communication with the gas outlet 20. Moreover, the radially outer portions of the first and second separation spaces 6, 22 are arranged in fluid communication with the liquid outlet 18.

The first and second separation spaces 6, 22 have a common inlet 16 and common outlets 18, 20.

The first passage 26 leads to a radially central portion of the first separation space 6 and the second passage 28 leads to a radially central portion of the second separation space 22.

Moreover, the first passage 26 leads to a radially central portion of the first separation aid 10 and the second passage 28 leads to a radially central portion of the second separation aid 24.

Accordingly, the centrifugal separator 2 is configured for concurrent separation of the gas liquid mixture into the gaseous phase and the liquid phase. That is, the separated phases travel in the same direction, from a central portion of the respective first and second separation aids 6, 22 radially outwardly through the first and second separation aids 6, 22.

In the illustrated embodiments, the inlet 16 is arranged between the first and second separation spaces 6, 22. That is, the gas liquid mixture may be introduced centrally into the centrifugal separator 2.

Moreover, the inlet 16 may be arranged to provide a flow direction of the gas liquid mixture entering the centrifugal separator 2 perpendicularly to the common axis 9. Accordingly, the first and second passages 26, 28 may be of substantially the same dimensions and may provide the same flow resistance to the gas liquid mixture. This may promote equal distribution of the gas liquid mixture between the first and second separation spaces 6, 22.

As in the illustrated embodiments, also the gas outlet 18 may be arranged between the first and second separation spaces 6, 22. This may promote an equal flow resistance in the first and second separation spaces 6, 22, which in turn may promote equal distribution of the gas liquid mixture between the first and second separation spaces 6, 22.

The first and second passages 26, 28 extend in opposite directions and perpendicularly to the inlet 16.

As in the illustrated embodiments, the gas outlet 18 may be arranged to provide a flow direction of the gaseous phase leaving the centrifugal separator 2 perpendicularly to the common axis 9. Accordingly, the flow path for the gaseous phase from each of the first and second separation spaces 6, 22 may be of substantially the same dimensions and may provide the same flow resistance to the gaseous phase. This may promote equal distribution of the gas liquid mixture between the first and second separation spaces 6, 22.

In a use position of the centrifugal separator 2, the common axis 9 may extend substantially horizontally, as shown in **Fig. 2b**. In this manner, gravity will influence the flow of the gas liquid mixture and the separated phases in an equal manner into, through, and out of, the first and second separation spaces 6, 22, respectively.

In a use position of the centrifugal separator 2 the liquid outlet 20 may be arranged at a lower portion of the centrifugal separator 2, as shown in **Fig. 2b**. In this manner, the liquid phase separated in the first and second separation spaces 6, 22 may be transported at least in part by gravity towards and/or through the liquid outlet 20.

The flow of gas liquid mixture, gaseous phase, and liquid phase through the centrifugal separator 2 is indicated with arrows in **Figs. 2a** **and** **2b**.

Each of the first and second separation aids 10, 24 may comprises a stack 30, 30' of separation discs 32, 32'. In this manner, an efficient separation of the gas liquid mixture may be provided in each of the first and second separation aids 10, 24.

Each of the separation discs 32, 32' may have a frustoconical, shape. Between the separation discs 32, 32' in the respective stack 30, 30', interspaces are formed into which the gas liquid mixture is introduced from a central portion of the respective stack 30, 30'.

The gas liquid mixture travels from an inner periphery of the discs 32, 32' towards an outer periphery while being separated into the liquid phase and the gaseous phases as the respective stack 30, 30' rotates. In **Figs. 2a** **and** **2b** only some of the separation discs 32, 32' are indicated.

Mentioned purely as examples, each stack 30, 30' of separation discs 32, 32' may comprise more than 50 separation discs, such as up to 100 separation discs, up to 200 separation discs, or more.

In the illustrated embodiments, the frustoconical separation discs 32, 32' are stacked with their large diameter ends in the respective stacks 30, 30' facing axially outwardly. In alternative embodiments, the frustoconical separation discs may be stacked with their large diameter ends in the respective stacks facing axially inwardly.

The housing 4 is arranged stationary in relation to the first and second separation aids 10, 24. That is, the first and second separation aids 10, 24 are arranged to rotate in relation to the housing 4.

Also, the housing 4 may be stationary in relation to a larger structure which produces the gas liquid mixture to be separated in the centrifugal separator 2, such as an ICE.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A centrifugal separator (2) for separating a gas liquid mixture into a gaseous phase and a liquid phase, the centrifugal separator (2) comprising:
a housing (4),
a first separation space (6) delimited at least in part by the housing (4),
a first separation aid (10) for separating the liquid phase from the gaseous phase arranged inside the first separation space (6),
a drive arrangement (7) configured for rotating the first separation aid (10),
an inlet (16) for the gas liquid mixture,
a gas outlet (18) for the separated gaseous phase,
a liquid outlet (20) for the separated liquid phase,
a second separation space (22) delimited at least in part by the housing (4),
a second separation aid (24) for separating the liquid phase from the gaseous phase arranged inside the second separation space (22), wherein
the drive arrangement (7) is configured for rotating the second separation aid (24), wherein
a first passage (26) connects the inlet (16) with the first separation space (6), and wherein
a second passage (28) connects the inlet (16) with the second separation space (22).

2. The centrifugal separator according to claim 1, wherein the inlet is arranged between the first and second separation spaces (6, 22).

3. The centrifugal separator according to claim 1 or 2, wherein radially outer portions of the first and second separation spaces (6, 22) are arranged in fluid communication with the gas outlet (20).

4. The centrifugal separator according to any one of the preceding claims, wherein radially outer portions of the first and second separation spaces (6, 22) are arranged in fluid communication with the liquid outlet (18).

5. The centrifugal separator according to any one of the preceding claims, wherein the first and second separation aids (10, 24) are arranged along a common axis (9).

6. The centrifugal separator according to claim 5, wherein the in a use position of the centrifugal separator (2), the common axis (9) extends substantially horizontally.

7. The centrifugal separator according to claim 5 or 6, wherein the drive arrangement (7) comprises a rotor shaft (8) extending along the common axis (9) through the first and second separation spaces (6, 22), and wherein the first and second separation aids are connected to the rotor shaft (8).

8. The centrifugal separator according to any one of claims 5 - 7, wherein the inlet (16) is arranged to provide a flow direction of the gas liquid mixture entering the centrifugal separator (2) perpendicularly to the common axis (9).

9. The centrifugal separator according to any one of claims 5 - 8, wherein the gas outlet (18) is arranged to provide a flow direction of the gaseous phase leaving the centrifugal separator (2) perpendicularly to the common axis (9).

10. The centrifugal separator according to any one of the preceding claims, wherein the drive arrangement (7) comprises at least a first drive unit (11) configure to rotate the first separation aid (10).

11. The centrifugal separator according to any one of the preceding claims, wherein in a use position of the centrifugal separator (2) the liquid outlet (18) is arranged at a lower portion of the centrifugal separator (2).

12. The centrifugal separator according to any one of the preceding claims, wherein each of the first and second separation aids (10, 24) comprises a stack (30, 30') of separation discs (32, 32').

13. The centrifugal separator according to any one of the preceding claims, wherein the first passage (26) leads to a radially central portion of the first separation space (6) and the second passage (28) leads to a radially central portion of the second separation space (22).

14. The centrifugal separator according to any one of the preceding claims, wherein the centrifugal separator (2) is configured for concurrent separation of the gas liquid mixture into the gaseous phase and the liquid phase.

15. The centrifugal separator according to any one of the preceding claims, wherein the housing (4) is arranged stationary in relation to the first and second separation aids (10, 24).
